# FASCICULE DE BREVET EUROPEEN

(11) **EP 1 836 523 B1**
(45) Date de publication et mention de la délivrance du brevet: **11.03.2009**
(21) Numéro de dépôt: 05816193.6
(22) Date de dépôt: 06.12.2005
(51) Int. Cl.: G02B 27/01

(54) **AFFICHEUR DESTINE A ETRE MONTE SUR UNE PAIRE DE LUNETTES**
FÜR ANBRINGUNG AUF EINER BRILLE AUSGELEGTES DISPLAY
DISPLAY DESIGNED TO BE MOUNTED ON A PAIR OF SPECTACLES

(30) Priorité: 10.01.2005 FR 0550077
(43) Date de publication de la demande: 26.09.2007
(73) Titulaire: ESSILOR INTERNATIONAL, CIE GENERALE D'OPITQUE, 94227 Charenton-Le-Pont (FR)
(72) Inventeur: MOLITON, Renaud, F-75015 Paris (FR)
(74) Mandataire: Lenne, Laurence
(86) Numéro de dépôt international: PCT/EP2005/056541
(87) Numéro de publication internationale: WO 2006/072524

(56) Documents cités:
- EP-A- 0 899 599
- US-A1- 2004 113 867
- US-A1- 2004 252 077
- US-B1- 6 249 386

## Description

L'invention concerne un afficheur destiné à être monté sur une paire de lunettes.

Un tel afficheur ophtalmique comporte un imageur optique destiné à permettre la projection d'informations, de type images ou multimédia. Cet imageur optique est destiné à mettre en forme les faisceaux optiques issus d'un système électronique et optique de génération de faisceaux lumineux à partir d'un signal électronique, de type écran miniature, diode laser, diode électroluminescente par exemple. L'imageur optique dirige les faisceaux optiques vers l'oeil du porteur pour permettre la visualisation du contenu informationnel.

Un tel afficheur permet la visualisation de contenus multimédias issus d'un téléphone mobile, d'un lecteur numérique, d'un ordinateur personnel, d'une console de jeu ou tout autre dispositif permettant de fournir du contenu multimédia.

Par afficheur est entendu ici l'ensemble constitué de l'imageur optique et du système électronique et optique de génération de faisceaux lumineux. Les éléments classiques de la paire de lunettes sont appelés monture et lentilles ophtalmiques portées par cette monture.

Il est connu des brevets US 6 204 974 et US 2004/252077 de fixer un afficheur sur une monture de lunettes.

Selon une première variante, l'afficheur est clipsé sur la monture et plus précisément sur une branche de cette monture.

Ce type de fixation comporte donc un agencement de solidarisation amovible de l'afficheur sur la monture, permettant la solidarisation de l'afficheur sur la paire de lunettes du porteur lorsque celui-ci souhaite l'utiliser et sa désolidarisation lorsque le porteur le souhaite, ce dernier utilisant alors sa paire de lunettes de façon classique.

Cependant, ce type de fixation ne permet aucun réglage de l'imageur selon les caractéristiques du porteur comme par exemple l'écart pupillaire, réglage dont l'objectif est de présenter au porteur une image complète, c'est-à-dire une image dont aucune partie ne soit occultée par un phénomène de vignettage.

Selon une seconde variante, l'afficheur comporte un imageur articulé sur le système électronique et optique de génération de faisceaux lumineux associé. Ce type d'afficheur peut également être clipsé sur une branche d'une monture.

Si en plus d'un agencement de solidarisation amovible de l'afficheur sur la monture, ce type d'afficheur permet grâce à son articulation un réglage de la position de l'imageur en fonction des caractéristiques du porteur, il pose cependant les problèmes suivants.

Une fois solidarisé sur la monture, par déplacement de l'articulation, l'imageur peut être positionné correctement par rapport à l'oeil du porteur. S'il est désolidarisé ensuite, cet ensemble non rigide reste très difficilement dans la même position. Autrement dit, la position relative de l'imageur et du système électronique et optique de génération de faisceaux lumineux est modifiée et le réglage est à refaire à chaque solidarisation.

Par ailleurs, cet ensemble articulé est relativement encombrant, ce qui est peu pratique lorsqu'il est désolidarisé et doit être stocké par exemple dans une poche de vêtement et ce qui est peu esthétique lorsqu'il est solidarisé à une monture de lunettes.

L'invention résout ces problèmes grâce à un afficheur pouvant être solidarisé sur la paire de lunettes et permettant le réglage de la position relative de l'imageur et de l'oeil du porteur, une fois pour toutes par le porteur, ce réglage étant conservé lors des désolidarisations ultérieures de l'afficheur. L'afficheur conforme à l'invention peut de plus être particulièrement compact et peu encombrant.

L'invention résout ces problèmes et, pour ce faire, elle propose un afficheur destiné à être monté sur une paire de lunettes selon les caractéristiques de la revendication 1.

L'afficheur conforme à l'invention peut être conçu de façon à être petit et léger. Il est ainsi maniable, portable et logeable dans une poche de vêtement. En outre, du fait de son faible poids, il n'impose pas de contrainte qui déforme la monture.

L'afficheur conforme à l'invention peut être situé près de la lentille de la paire de lunettes, grâce à un système de solidarisation compact. Il ne déséquilibre donc pas la monture de lunettes.

Selon un mode de réalisation préféré, ledit second élément présente un capot de protection, seul l'imageur étant extérieur à ce capot.

L'afficheur conforme à l'invention est ainsi protégé contre les chocs susceptibles de l'endommager.

De préférence, ledit agencement de réglage est constitué d'un agencement de rail et de glissière.

Et avantageusement, ledit rail est porté par ledit premier élément et ladite glissière est portée par ledit second élément.

En variante, ledit agencement de réglage peut être entièrement positionné sur l'un quelconque desdits premier et second éléments.

Avantageusement, ladite glissière est sensiblement parallèle à l'axe longitudinal de l'imageur.

De préférence, ledit moyen de blocage est constitué d'une vis portée par ledit second élément et destinée à pousser un patin de blocage venant en butée contre ledit rail dudit premier élément, lorsque ce dernier est en place dans ladite glissière.

Ledit agencement de solidarisation amovible peut être constitué d'un agencement de clipsage.

Ledit agencement de clipsage peut être complété d'une lame de butée contre la paire de lunettes.

Ledit imageur peut comporter sur sa face tournée vers la lentille de la paire de lunettes un agencement anti-frottement

L'invention concerne également une monture de paire de lunettes destinée à recevoir un afficheur comme précisé ci-dessus, caractérisé en ce qu'elle comporte une cavité destinée à recevoir ledit premier élément par emboîtement présentant deux orifices de clipsage dont les axes sont distincts l'un de l'autre.

Lorsque l'afficheur est désolidarisé de la monture, cette dernière est d'aspect semblable à une monture de lunette traditionnelle.

L'invention est décrite ci-après plus en détail à l'aide de figures ne représentant qu'un mode de réalisation préféré de l'invention.

La figure 1 est une vue en perspective d'une paire de lunettes équipée d'un afficheur.

La figure 2 est une vue de dessus partielle d'un afficheur.

La figure 3 est une vue en perspective d'une paire de lunettes équipée d'une partie d'un afficheur.

Les figures 4 et 5 sont des vues en perspective de l'élément représenté sur la figure 2 conforme à l'invention.

La figure 6 est une vue de face partielle d'un afficheur conforme à l'invention.

La figure 7 est une vue arrière partielle d'un afficheur conforme à l'invention.

La figure 8 est une vue de dessus partielle d'un afficheur conforme à l'invention.

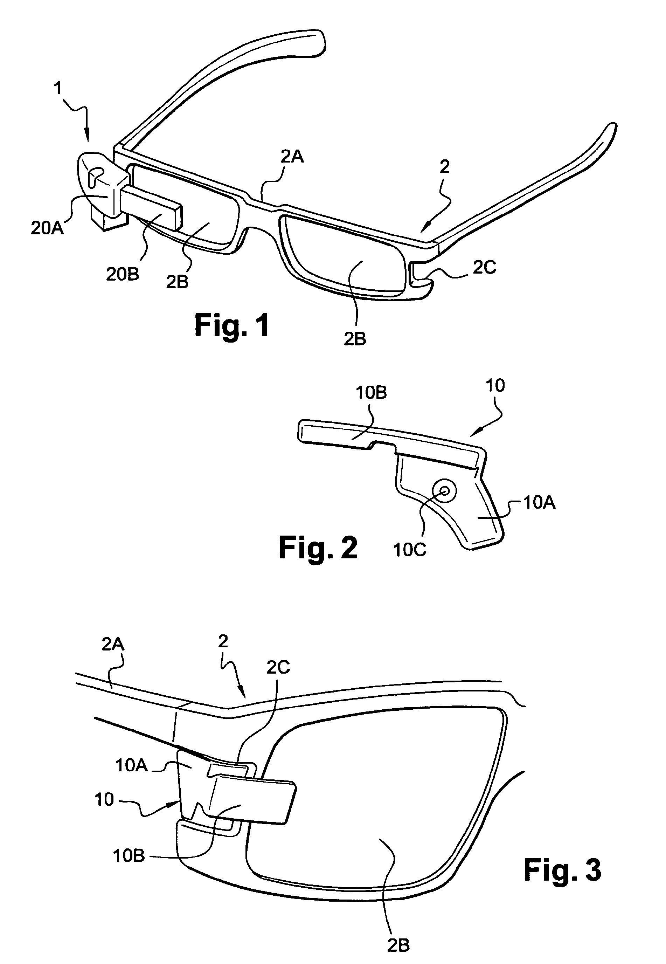

La figure 1 représente un afficheur 1 monté sur une paire de lunettes 2 comportant une monture 2A et deux lentilles ophtalmiques 2B.

L'afficheur 1 comporte un système électronique et optique de génération de faisceaux lumineux 20A et un imageur 20B destiné à mettre en forme les faisceaux optiques issus de ce dernier.

Cet afficheur comporte un agencement de solidarisation amovible sur la paire de lunettes 2 et un agencement de réglage de la position relative de l'imageur 20B et de l'oeil du porteur et plus précisément de réglage à l'écart pupillaire. Il comporte deux éléments, un premier élément 10 portant l'agencement de solidarisation amovible et un second élément 20 comprenant le système électronique et optique 20A et l'imageur 20B et connectable au premier élément 10 grâce à l'agencement de réglage comprenant un moyen de blocage en position.

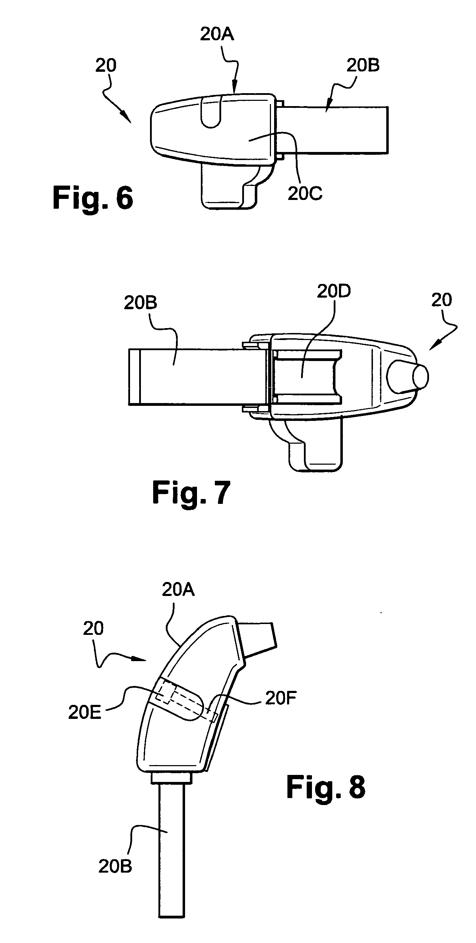

Plus précisément, le premier élément 10 est visible sur les figures 2 à 5 et le second élément 20 sur les figures 6 à 8.

Comme représenté sur les figures 2 et 3, le premier élément 10 est formé d'une partie d'emboîtement 10A destinée à être reçue dans une cavité 2C agencée sur la monture 2A de la paire de lunettes. Dans le mode de réalisation spécifique représenté, cette cavité est agencée sur un montant latéral de la monture 2.

La cavité 2C présente deux orifices de clipsage non visibles dans chacun desquels vient en prise par clipsage respectivement un tenon 10C porté par la partie d'emboîtement 10A. Les deux tenons sont disposés sur deux faces opposées de celle-ci.

L'agencement de solidarisation amovible de l'afficheur est donc constitué de cet agencement de clipsage porté par le premier élément 10.

Ce premier élément 10 comporte également un rail 10B faisant saillie sur la face avant de la paire de lunettes 2, lorsque le premier élément 10 est monté sur celle-ci.

Avantageusement, le rail 10B est sensiblement parallèle au plan moyen du cercle de la monture dans lequel est montée la lentille 2B.

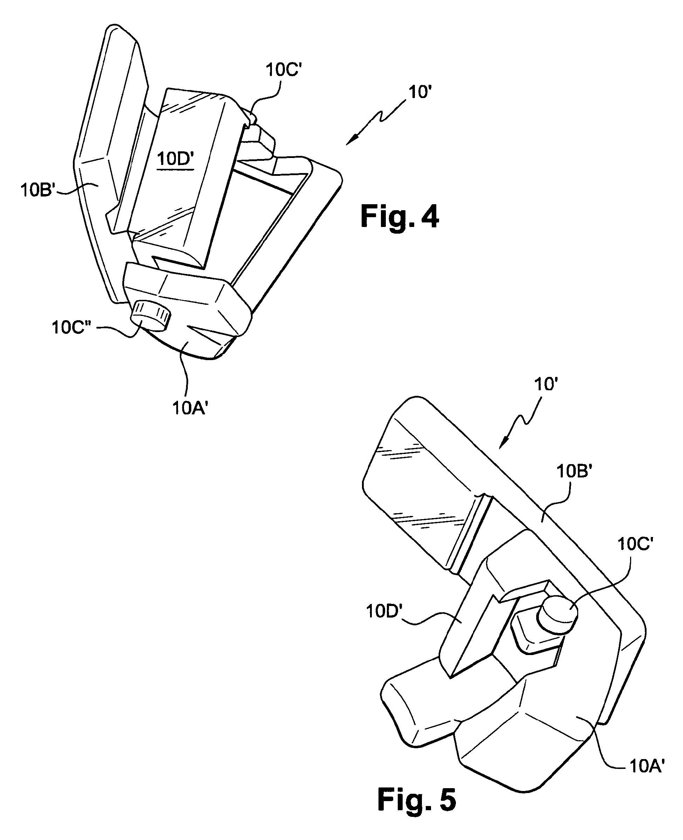

Les figures 4 et 5 représentent une réalisation 10' du premier élément conformément à l'invention.

Ce mode de réalisation diffère du premier élément 10 déjà décrit plus haut en référence à la figure 2 par deux perfectionnements.

Selon l'invention, les axes des tenons 10C' et 10C" d'encliquetage dans la cavité 2C de la monture de lunettes sont distincts l'un de l'autre et avantageusement parallèles, afin d'éviter toute rotation du premier élément 10' une fois encliqueté sur la monture. En d'autres termes, les deux orifices de clipsage correspondants dans la cavité 2C de la monture ne sont pas en vis à vis sur les deux faces opposées de cette cavité 2C, qui sont sensiblement horizontales vues selon la figure 3.

Par ailleurs, ce premier élément 10' comporte une lame 10D' transversale assurant la butée de l'élément sur la face de la cavité 2C de la monture, qui est perpendiculaire aux dites faces opposées précédentes et qui est sensiblement verticale vue selon la figure 3.

Grâce à ces perfectionnements, une fois encliqueté dans la cavité 2C de la monture, le premier élément 10' est très fermement maintenu en place et le second élément 20 peut être disposé et réglé sur cet élément, sans difficulté ou déréglage.

Le second élément 20 est quant à lui visible sur les figures 6 à 8.

Ce second élément 20 comprend le système électronique et optique 20A et l'imageur 20B et présente un capot de protection 20C, seul l'imageur 20B étant extérieur à ce capot. Dans l'exemple illustré, l'imageur 20B a son axe longitudinal sensiblement horizontal et il est disposé à proximité d'une lentille 2B de la paire de lunettes.

Ce second élément 20 porte une glissière 20D sensiblement parallèle à l'axe longitudinal de l'imageur 20B. Grâce à cette glissière 20D destinée à recevoir le rail 10B, le second élément 20 est connectable au premier élément 10 au moyen de cet agencement de réglage par rail et glissière comprenant également un moyen de blocage en position. Ce moyen de blocage est constitué d'une vis 20E portée par le second élément 20 et destinée à pousser un patin de blocage 20F venant en butée contre le rail 10B du premier élément, lorsque ce dernier est en place dans la glissière 20D.

Par ailleurs, l'imageur 20B peut comporter sur sa face tournée vers la lentille 2B de la paire de lunettes un agencement anti-frottement destiné à protéger ladite lentille. Cet agencement anti-frottement peut être constitué d'un revêtement spécifique de la face de l'imageur tournée vers la lentille.

Lors du premier équipement de la monture de lunettes 2 avec un afficheur conforme à l'invention par un porteur, le premier élément 10 est clipsé dans une cavité 2C de la monture, comme représenté sur la figure 3.

Le second élément 20 est alors connecté à ce premier élément 10 par mise en place de la glissière 20D sur le rail 10B de ce premier élément, comme représenté sur la figure 1.

La position relative de l'imageur 20B et de l'oeil du porteur peut alors être réglée par positionnement relatif du rail dans la glissière et cette position optimale est bloquée par vissage de la vis 20E accessible de l'extérieur du capot 20C du second élément En particulier, il est ainsi possible de régler la position de l'imageur en fonction de l'écart pupillaire du porteur.

Lorsque le porteur ne veut plus utiliser l'afficheur, il démonte le premier élément 10 avec le second élément solidaire à celui-ci. La monture de la paire de lunettes 2 présente alors une forme esthétique telle que représentée sur la droite de la figure 1. L'afficheur 1 quant à lui est une pièce compacte et rigide qui peut être rangé sans problème d'encombrement ou de déréglage.

Lors des utilisations ultérieures de l'afficheur, il suffit au porteur, de clipser l'afficheur 1 dans la cavité 2C correspondante de la monture de paire de lunettes 2. Aucun réglage ultérieur n'est nécessaire pour un même porteur.

Un marquage peut être réalisé sur la lentille ophtalmique ou sur le rail afin d'assister et faciliter le réglage de la position relative de l'imageur et de l'oeil du porteur.

L'invention n'est pas limitée au mode de réalisation décrit ci-dessus.

Entre autre, l'afficheur peut être solidarisé à une lentille de la paire de lunettes au lieu d'être solidarisé à la monture de celle-ci.

## Revendications

1. Afficheur destiné à être monté sur une paire de lunettes (2), comportant un système électronique et optique de génération de faisceaux lumineux (20A) et un imageur (20B) destiné à mettre en forme les faisceaux optiques issus de ce dernier, cet afficheur comportant un agencement de solidarisation amovible sur la paire de lunettes et un agencement de réglage de La position relative dudit imageur et de l'oeil du porteur, afficheur comportant deux éléments, un premier élément (10, 10') portant ledit agencement de solidarisation amovible et un second élément (20) comprenant ledit système électronique et optique et ledit imageur et connectable audit premier élément grâce audit agencement de réglage comprenant un moyen de blocage en position réglée, afficheur **caractérisé en ce que** ledit agencement de solidarisation amovible comprend deux tenons (10C, 10C', 10C") portés par ledit premier élément (10) et destinés à être clipsés dans deux orifices agencés sur la paire de lunettes (2), les axes desdits tenons (10C', 10C") étant distincts l'un de l'autre.

2. Afficheur selon la revendication 1, **caractérisé en ce que** ledit second élément (20) présente un capot de protection (20C), seul l'imageur étant extérieur à ce capot.

3. Afficheur selon la revendication 1 ou 2, **caractérisé en ce que** ledit agencement de réglage est constitué d'un agencement de rail et de glissière.

4. Afficheur selon la revendication 3, **caractérisé en ce que** ledit rail (10B, 10B') est porté par ledit premier élément (10, 10') et ladite glissière (20D) est portée par ledit second élément (20).

5. Afficheur selon la revendication 4, **caractérisé en ce que** ladite glissière (20D) est sensiblement parallèle à l'axe longitudinal de l'imageur (20B).

6. Afficheur selon la revendication 4 ou 5, **caractérisé en ce que** ledit moyen de blocage est constitué d'une vis (20E) portée par ledit second élément (20) et destinée à pousser un patin de blocage venant en butée contre ledit rail (1 ou, 10B') dudit premier élément, lorsque ce dernier est en place dans ladite glissière (20D).

7. Afficheur selon l'une des revendications précédentes, **caractérisé en ce que** ledit agencement de clipsage est complété d'une lame de butée (10D') contre la paire de lunettes.

8. Afficheur selon l'une des revendications précédentes, **caractérisé en ce que** ledit imageur (20B) comporte sur sa face tournée vers la lentille (2B) de la paire de lunettes un agencement anti-frottement.

9. Monture de paire de lunettes destinée à recevoir un afficheur selon l'une des revendications précédentes, **caractérisé en ce qu'**elle comporte une cavité (2C) destinée à recevoir ledit premier élément (10) par emboîtement et présentant deux orifices de clipsage, les axes desdits orifices étant distincts l'un de l'autre.

## Claims

1. A display designed to be mounted on a pair of spectacles (2), comprising an electronic and optical system for generating light beams (20A) and an imager (20B) for shaping the optical beams coming therefrom, the display comprising a detachable fastening arrangement on the pair of spectacles and an arrangement for setting the relative position of said imager and the wearer's eye, with the display comprising two parts, a first part (10, 10') supporting said detachable fastening arrangement and a second part (20) comprising said electronic and optical system and said imager, and capable of being connected to said first part by means of said setting arrangement comprising means for locking in the set position, the display being **characterized in that** said detachable fastening arrangement comprises two endpieces (10C, 10C', 10C") supported by the first part (10) and designed for snapping into two orifices arranged on the pair of spectacles (2), the axes of said endpieces (10C', 10C") being different from each other.

2. The display according to claim 1, **characterized in that** said second part (20) has a protective cover (20C), with only the imager being external to the cover.

3. The display according to claim 1 or 2, **characterized in that** said setting arrangement is composed of a rail and slide arrangement.

4. The display according to claim 3, **characterized in that** said rail (108, 108') is supported by said first part (10, 10') and said slide (20D) is supported by said second part (20).

5. The display according to claim 4, **characterized in that** said slide (200) is substantially parallel to the longitudinal axis of the imager (20B).

6. The display according to claim 4 or 5, **characterized in that** said locking means is composed of a screw (20E) supported by said second part (20) and designed for pushing a locking block abutting on said rail (10B, 10B') of said first part, when the latter is in place inside said slide (20D).

7. The display according to any of the preceding claims, **characterized in that** said snap-on arrangement is completed by a stop blade (10D') against the pair of spectacles.

8. The display according to any of the preceding claims, **characterized in that** said imager (20B) comprises on the side thereof oriented towards the lens (2B) of the pair of spectacles an antifriction arrangement.

9. A spectacle frame, designed to receive a display according to any of the preceding claims, **characterized in that** it comprises an indentation (2C) designed to fittingly receive said first part (10) and having two snap-on orifices, the axes of said orifices being different from each other.

## Patentansprüche

1. Display zum Anbringen auf einer Brille (2), umfassend ein elektronisches und optisches System zum Erzeugen von Lichtstrahlen (20A) und einen Bildgenerator (20B) zum Formgeben der optischen Strahlen, die aus diesem hervorgehen, wobei dieses Display eine abnehmbare Befestigungsanordnung auf der Brille und eine Anordnung zum Einstellen der relativen Position des Bildgenerators und des Auges des Trägers umfasst, wobei das Display zwei Teile umfasst, einen ersten Teil (10, 10'), der die abnehmbare Befestigungsanordnung trägt, und einen zweiten Teil (20), der das elektronische und optische System und den Bildgenerator umfasst und über die Einstellanordnung, die ein Mittel zum Blockieren in einer eingestellten Position umfasst, an den ersten Teil angeschlossen werden kann, wobei das Display **dadurch gekennzeichnet ist, dass** die abnehmbare Befestigungsanordnung zwei Backen (10C, 10C', 10C") umfasst, die von dem ersten Teil (10) getragen werden und dazu gedacht sind, in zwei Öffnungen einzurasten, die auf der Brille (2) angeordnet sind, wobei die Achsen der Backen (10C', 10C") voneinander verschieden sind.

2. Display nach Anspruch 1, **dadurch gekennzeichnet, dass** der zweite Teil (20) eine Schutzabdeckung (20C) aufweist, wobei nur der Bildgenerator außerhalb dieser Abdeckung liegt.

3. Display nach Anspruch 1 oder 2, **dadurch gekennzeichnet, dass** die Einstellanordnung aus einer Anordnung aus Schiene und Gleitführung besteht.

4. Display nach Anspruch 3, **dadurch gekennzeichnet, dass** die Schiene (10B, 10B') von dem ersten Teil (10, 10') getragen wird und dass die Gleitführung (20D) von dem zweiten Teil (20) getragen wird.

5. Display nach Anspruch 4, **dadurch gekennzeichnet, dass** die Gleitführung (20D) zur Längsachse des Bildgenerators (20B) im Wesentlichen parallel ist.

6. Display nach Anspruch 4 oder 5, **dadurch gekennzeichnet, dass** das Blockiermittel aus einer Schraube (20E) besteht, die von dem zweiten Teil (20) getragen wird, und dazu gedacht ist, ein Blockierstück zu schieben, das an der Schiene (10B, 10B') des ersten Teils anschlägt, wenn dieser sich in der Gleitführung (20D) befindet.

7. Display nach einem der vorhergehenden Ansprüche, **dadurch gekennzeichnet, dass** die Einrastanordnung durch eine Anschlagfeder (10D') an der Brille ergänzt wird.

8. Display nach einem der vorhergehenden Ansprüche, **dadurch gekennzeichnet, dass** der Bildgenerator (20B) auf seiner zum Linsenglas (2B) der Brille gewendeten Seite eine Antifriktionsanordnung umfasst.

9. Brillengestell zum Aufnehmen eines Displays nach einem der vorhergehenden Ansprüche, **dadurch gekennzeichnet, dass** es eine Vertiefung (2C) umfasst, um den ersten Teil (10) durch Einstecken aufzunehmen, und dass es zwei Einrastöffnungen aufweist, wobei die Achsen der Öffnungen voneinander verschieden sind.
